(19) Europäisches Patentamt

European Patent Office

Office européen des brevets

(11) **EP 4 686 038 B1**

(12) **EUROPEAN PATENT SPECIFICATION**

(45) Date of publication and mention
of the grant of the patent:
**22.07.2026 Bulletin 2026/30**

(21) Application number: **24217645.1**

(22) Date of filing: **05.12.2024**

(51) International Patent Classification (IPC):
***H02J 7/00*** *(2026.01)*

(52) Cooperative Patent Classification (CPC):
**H02J 7/971; H02J 7/84;** Y02E 60/10

(54) **CHARGING AND DISCHARGING CONTROL METHOD, ELECTRIC DEVICE AND STORAGE MEDIUM**

LADE- UND ENTLADESTEUERUNGSVERFAHREN, ELEKTRISCHE VORRICHTUNG UND SPEICHERMEDIUM

PROCÉDÉ DE COMMANDE DE CHARGE ET DE DÉCHARGE, DISPOSITIF ÉLECTRIQUE ET SUPPORT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.07.2024 CN 202411018218**
**18.10.2024 PCT/CN2024/125843**

(43) Date of publication of application:
**28.01.2026 Bulletin 2026/05**

(73) Proprietor: **Eve Energy Co., Ltd.**
**Huizhou, Guangdong 516006 (CN)**

(72) Inventors:
• **DING, Xunfeng**
**Huizhou, Guangdong, 516006 (CN)**
• **ZHOU, Hongquan**
**Huizhou, Guangdong, 516006 (CN)**

(74) Representative: **Berggren Oy**
**P.O. Box 16**
**Fabianinkatu 21**
**00101 Helsinki (FI)**

(56) References cited:
**WO-A1-2022/272244      CN-A- 112 259 813**
**US-A1- 2021 091 589**

**Description**

TECHNICAL FIELD

The present invention relates to the technical field of battery, and in particular to a charging and discharging control method, an electric device, and a storage medium.

BACKGROUND

As electric vehicles develop, how to best use batteries has become a focus of attention.

In the related art, charging and discharging are usually performed based on the charge and discharge current at the beginning of life (BOL) of the battery, that is, during the entire process, charging and discharging are performed based on the charge and discharge current at the beginning of life of the battery.

However, since the current remains unchanged during the charging and discharging process, the battery's state of health (SOH) will inevitably deteriorate during the operation of the battery, causing the charge and discharge rate to gradually increase as the SOH deteriorates. The current is too large during the charging and discharging process, which accelerates the decay of the battery life and easily leads to safety hazards in the battery.

CN112259813A discloses a battery charging and discharging determination method, system and device.

TECHNICAL SOLUTION

The present invention is defined by the independent claims as appended. Developments are set forth in the dependent claims.

In some possible implementations, a charging and discharging control method is provided, including steps of:

acquiring a current state of health of a battery to be controlled during a charging and discharging process;
determining a target charge and discharge parameter of the battery according to the current state of health; and
charging and discharging the battery according to the target charge and discharge parameter.

In some possible implementations, the target charge and discharge parameter includes at least one of a target charge and discharge current, a target charge and discharge depth, and a target charge and discharge power;

wherein the step of determining a target charge and discharge parameter of the battery according to the current state of health includes steps of:
acquiring a starting state current of the battery when the target charge and discharge parameter is the target charge and discharge current;
determining a mapping rate coefficient of the battery according to a preset correspondence between a rate coefficient and a state of health of the battery and according to the current state of health;
determining a mapping rate value coefficient of the battery according to a preset correspondence between a rate value coefficient and the state of health of the battery and according to the current state of health; and
determining the target charge and discharge current according to the current state of health, the mapping rate coefficient, the mapping rate value coefficient, and the starting state current.

In some possible implementations, the step of determining the target charge and discharge current according to the current state of health, the mapping rate coefficient, the mapping rate value coefficient, and the starting state current includes steps of:

determining a target rate coefficient according to the current state of health and the mapped rate coefficient;
determining a target charge and discharge rate according to the target rate coefficient and the mapping rate value coefficient; and
determining the target charge and discharge current according to the target charge and discharge rate and the starting state current.

In some possible implementations, the step of determining a target rate coefficient according to the current state of health and the mapping rate coefficient includes a step of:
selecting a minimum value of a current state of health value corresponding to the current state of health and the mapping rate coefficient as the target rate coefficient.

In some possible implementations, the step of determining a target charge and discharge parameter of the battery according to the current state of health includes steps of:

> determining a mapped charge state range corresponding to the current state of health according to a preset correspondence between a charge state range and the state of health of the battery when the target charge and discharge parameter is the target charge and discharge depth; and
> determining the target charge and discharge depth according to the mapped charge state range.

In some possible implementations, the mapped charge state range includes upper and lower limits of mapped charge state; and wherein the step of determining the target charge and discharge depth according to the mapped charge state range includes a step of:
calculating a difference between the upper and lower limits of mapped charge state in the mapped charge state range to acquire the target charge and discharge depth.

In some possible implementations, the step of determining a target charge and discharge parameter of the battery according to the current state of health includes steps of:

> acquiring a starting state power of the battery when the target charge and discharge parameter is the target charge and discharge power; and
> determining the target charge and discharge power according to the starting state power and the current state of health of the battery.

In some possible implementations, the step of acquiring a current state of health of a battery to be controlled during a charging and discharging process includes steps of:

> selecting a plurality of test batteries in different years of use, performing cycle tests and storage tests on the test batteries to acquire a correspondence between a year of use and a state of health of the battery, wherein the test batteries are same in type as the battery to be controlled; and
> acquiring the current year of use of the battery, and determining the current state of health according to the current year of use and the correspondence between the year of use and the state of health.

In some possible implementations, an electronic device is provided, including:

> one or more processors;
> a memory; and
> one or more application programs, wherein the one or more application programs are stored in the memory and configured to be executed by the processor to implement any charging and discharging control method.

In some possible implementations, a computer-readable storage medium having a computer program stored thereon is provided, where the computer program is configured to be loaded by a processor to execute any charging and discharging control method as described above.

In some possible implementations, a computer program product including a computer program/instruction is provided, which is configured to execute the steps in any charging and discharging control method when executed by a processor.

In some possible implementations, a charging and discharging control device is provided, including:

> an acquisition module configured to acquire a current state of health of a battery to be controlled during a charging and discharging process;
> a determination module configured to determine a target charge and discharge parameter of the battery according to the current state of health; and
> a control module configured to charge and discharge the battery according to the target charge and discharge parameter.

According to the charging and discharging control method of the present invention, the current SOH of the battery to be controlled during the charging and discharging process is acquired, the target charge and discharge parameter of the battery is determined according to the current SOH, and the battery is charged and discharged according to the target charge and discharge parameter. Since the impact of the change of the battery's SOH on the battery's charge and discharge capacity is fully considered, the target charge and discharge parameter determined based on the current SOH are more accurate, and the charge and discharge parameter is determined in real time based on the current SOH, which avoids the problem of rapid battery life decay caused by always using the charge and discharge current at the BOL,

# EP 4 686 038 B1

reduces the decay rate of the battery life, and improves the battery's usage effect and safety.

BRIEF DESCRIPTION OF THE DRAWINGS

FIG. 1 is a flow chart of a charging and discharging control method according to an embodiment of the present invention;

FIG. 2 is a schematic diagram showing the correspondence between the year of use and the current state of health (SOH) of a battery according to an embodiment of the present invention;

FIG. 3 is a schematic diagram showing mapping rate coefficients of batteries in different years of use according to an embodiment of the present invention;

FIG. 4 is a schematic diagram showing the correspondence between the cycle life and the charge and discharge rate of a battery according to an embodiment of the present invention;

FIG. 5 is a schematic diagram showing a cycle life and a charge state range of a battery according to an embodiment of the present invention;

FIG. 6 is a schematic diagram showing a structure of a charging and discharging control device according to an embodiment of the present invention;

FIG. 7 is a schematic diagram showing the structure of an electronic device according to an embodiment of the present invention.

DETAILED DESCRIPTION OF THE EMBODIMENTS

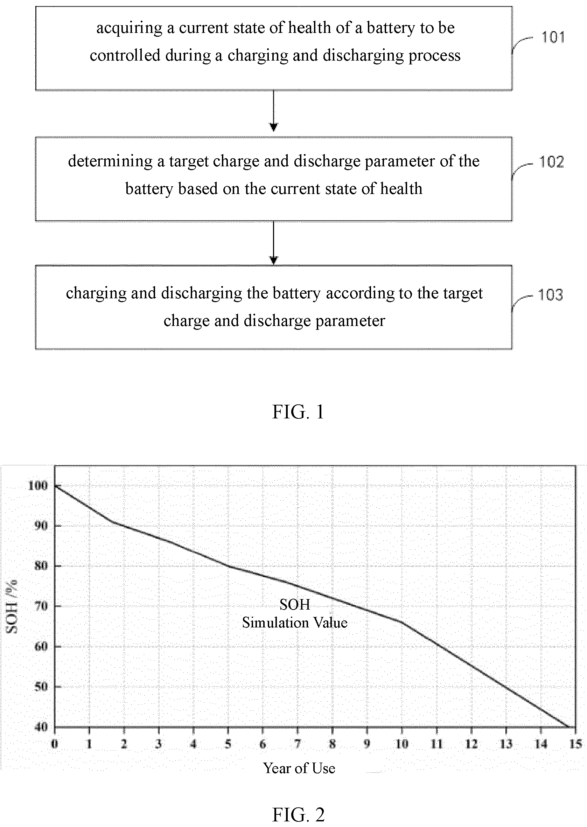

As shown in FIG. 1, it is a flow chart of a charging and discharging control method according to an embodiment of the present invention. The execution subject of the embodiments of the present invention is the power-consuming device or the control module in the power-consuming device. The control module may be a battery management system (BMS), a vehicle control unit (VCU), etc. The embodiments of the present invention are described in detail by taking the execution subject as BMS as an example. The charging and discharging control method includes:

Step 101, acquiring a current state of health (SOH) of a battery to be controlled during a charging and discharging process.

The battery to be controlled may be a power battery, an energy storage battery, etc. The current state of health refers to the current SOH of the battery during the charging and discharging process, which may be the SOH of any life cycle in the entire life cycle of the battery.

Specifically, the current state of health can be acquired from the BMS, or the current state of health of the battery can be predicted through cycle testing. In a possible implementation, the current state of health of the battery during the charging and discharging process is acquired so that the current state of health can be effectively used to adjust the charge and discharge parameters, thereby maximizing the optimization of the battery usage effect.

In a possible implementation, in Step 101, acquiring a current state of health of a battery to be controlled during a charging and discharging process, including: selecting a plurality of test batteries in different years of use, performing cycle tests and storage tests on the test batteries to acquire a correspondence between a year of use and an SOH of the battery, wherein the test batteries are same in type as the battery to be controlled; acquiring the current year of use of the battery, and determining the current SOH based on the current year of use and the correspondence between the year of use and the SOH.

The test batteries are those of the same type as the battery to be controlled but in different years of use.

Specifically, cycle tests and storage tests can be performed on the test batteries in different years of use, respectively, so as to acquire the cycle life and calendar life of the test batteries. The SOH of the test batteries can be determined based on the correspondence between the SOH and the cycle life and calendar life. Data fitting is performed based on the SOH of each test battery and the corresponding years of use, so as to acquire the correspondence between the year of use and the SOH of the battery. Based on this correspondence, the SOH corresponding to the year of use of the battery, that is, the current SOH of the battery, can be acquired.

In a possible implementation, different test batteries are subjected to cycle tests, and the test process thereof is as follows: acquiring a correspondence between the cumulative charged capacity and the capacity retention rate of each test battery during an actual cycle test to determine the corresponding cycle life of each test battery. For example, during the life cycle of a test battery, the cumulative charged capacity is 200Ah, and the corresponding SOH is 98%, and the cumulative charged capacity is 500Ah, and the corresponding SOH is 95%. When other values of capacity are charged, linear interpolation is performed to determine the cycle life of test batteries in different yeas of use.

In a possible implementation, storage tests are performed on different test batteries, and the test process thereof is as follows: acquiring a correspondence between the storage test time and the capacity retention rate of each test battery to determine the calendar life of each test battery. For example, for a test battery which has been used for less than 5 years, the corresponding SOH is 98% when stored for 30 days and 95% when stored for 60 days. For other storage times, linear interpolation is performed to determine the calendar life of test batteries in different years of use.

After determining the cycle life and storage life of the test battery, the SOH of the test battery can be calculated using the following formula: SOH_T=1-(1-cycle_SOH)-(1-calendar_SOH), where SOH_T represents the state of health of the test battery, cycle_SOH represents the cycle life of the test battery, and calendar_SOH represents the calendar life of the test battery. By acquiring the actual test data of different test batteries and then calculating the state of health of the test batteries, the correspondence between the year of use and the state of health of the battery can be established. From this correspondence, the state of health corresponding to the year of use of the battery, that is, the current state of health, can be acquired. As shown in FIG. 2, it is a schematic diagram showing the correspondence between the year of use and the current SOH of a battery according to an embodiment of the present invention.

Step 102, determining a target charge and discharge parameter of the battery based on the current state of health.

The target charge and discharge parameter is a parameter used to control the charging and discharging of the battery. For example, it may be at least one of the charge and discharge current, the charge and discharge power, and the charge and discharge depth.

Specifically, the battery's charge and discharge parameters are adjusted by acquiring the current SOH, so that the target charge and discharge parameters are acquired. In this way, the target charge and discharge parameters can be adaptively adjusted according to the battery's current SOH. The impact of changes in the battery's SOH on the battery's charge and discharge capabilities is fully considered, making the target charge and discharge parameters determined based on the current SOH more accurate, and the charge and discharge parameters are determined in real time based on the battery's SOH, avoiding the problem of using the charge and discharge current in the BOL all the time, which may cause the battery life to decay too quickly.

In a possible implementation, the target charge and discharge parameters include at least one of a target charge and discharge current, a target charge and discharge depth, and a target charge and discharge power. In Step 102, determining a target charge and discharge parameter of the battery based on the current state of health, including: when the target charge and discharge parameter is the target charge and discharge current, acquiring the starting state current of the battery; determining a mapping rate coefficient of the battery according to the preset correspondence between a rate coefficient and the SOH of the battery, and the current SOH; determining a mapping rate value coefficient of the battery according to the preset correspondence between a rate value coefficient and the SOH of the battery, and the current SOH; determining the target charge and discharge current according to the current SOH, the mapping rate coefficient, the mapping rate value coefficient, and the starting state current.

The target charge and discharge parameter may be a target charge and discharge current, and/or a target charge and discharge depth, and/or a target charge and discharge power.

The starting state current is the charge and discharge current of the battery when it is at BOL, which can be read from the BMS.

The rate coefficient is a coefficient used to adjust the charge and discharge rate of the battery during the charging and discharging process. In a possible implementation, the rate coefficient is greater than 0 and less than or equal to 1. The rate coefficient includes the mapping rate coefficient and the mapping rate value coefficient, wherein the mapping rate coefficient may be a preset coefficient of C value, and the mapping rate value coefficient may be a preset charge and discharge rate coefficient. The mapping rate coefficient and the mapping rate value coefficient are used to reduce the charge and discharge rate of the battery during the charging and discharging process.

The preset correspondence between the rate coefficient and the SOH of the battery is pre-constructed and used to represent a relationship between the charge and discharge rate coefficient and SOH of the battery. By analyzing the correlation between the battery usage effect and the charge and discharge rate coefficient and SOH, the correspondence between the charge and discharge rate coefficient and SOH that maximizes the battery usage effect can be determined as the preset correspondence between the rate coefficient and the SOH of the battery, so that the optimal charge and discharge rate coefficient, i.e., the mapping rate coefficient, can be determined according to the correspondence, and then the target charge and discharge current determined according to the optimal charge and discharge rate coefficient can maximize the battery charge and discharge effect.

The preset correspondence between the rate value coefficient and the SOH of the battery is pre-constructed and used to represent a relationship between the charge and discharge rate value coefficient and SOH of the battery. By analyzing the correlation between the battery usage effect and the charge and discharge rate value coefficient and SOH, the correspondence between the charge and discharge rate value coefficient and SOH that maximizes the battery usage effect can be determined as the preset correspondence between the rate coefficient and the SOH of the battery, so that the optimal charge and discharge rate value coefficient, i.e., the mapping rate value coefficient, can be determined according to the correspondence, and then the target charge and discharge current determined according to the optimal charge and discharge rate coefficient can maximize the battery charge and discharge effect.

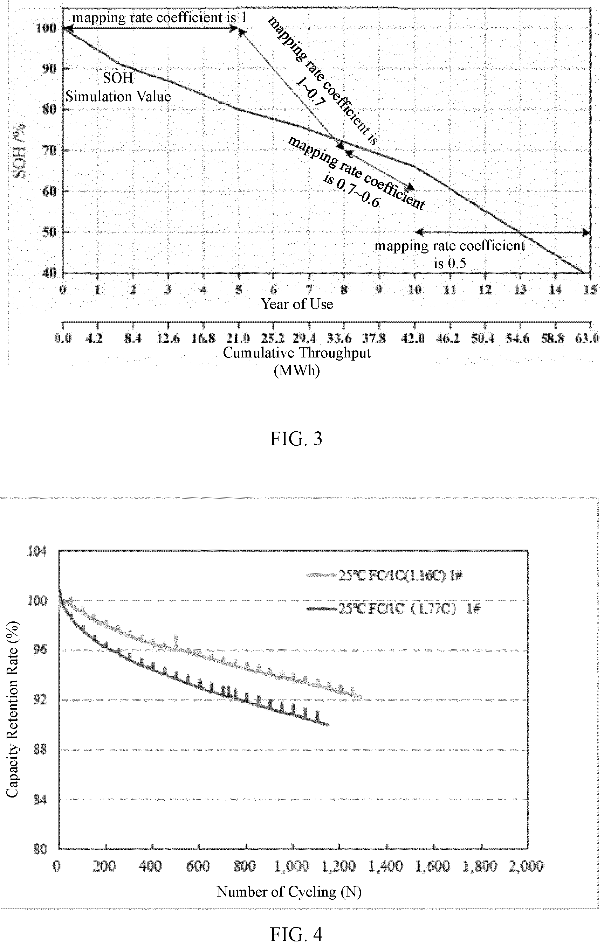

In a possible implementation, the year of use of the battery corresponding to the current SOH can be determined according to the schematic diagram of the correspondence between the year of use of the battery and the current SOH shown in FIG. 2, and the mapping rate coefficients and mapping rate value coefficients of four batteries in different years of use are shown in Table 1. As shown in FIG. 3, it is a schematic diagram showing the mapping rate coefficients of batteries in different years of use.

Table 1: Mapping Rate Coefficients and Mapping Rate Value Coefficients of Batteries in Four Different Years of Use.

| Year of Use: x | x≤5 years | 5 years <x≤8 years | 8 years <x≤10 years | x>10 years |
|---|---|---|---|---|
| Mapping Rate Coefficient | 1.0 | 0.7~0.8 | 0.6~0.7 | 0.5~0.6 |
| Mapping Rate Value Coefficient | 1.0 | 1.0 | 0.7~0.8 | 0.5~0.7 |

Specifically, the mapping rate coefficient corresponding to the current SOH can be determined from the preset correspondence between the rate coefficient and the SOH of the battery, the mapping rate value coefficient corresponding to the current SOH can be determined from the preset correspondence between the rate value coefficient and the SOH of the battery, and the target charge and discharge current can be calculated according to the current SOH, the mapping rate coefficient, the mapping rate value coefficient and the starting state current. It can be understood that in a possible implementation, the charge and discharge current is adjusted based on the current SOH of the battery, so that the adjusted target charge and discharge current is more accurate, which can reduce the decay rate of the battery life, which is conducive to improving the accuracy of battery charge and discharge control, improving battery safety, and ensuring the maximum battery usage effect.

In a possible implementation, determining the target charge and discharge current according to the current SOH, the mapping rate coefficient, the mapping rate value coefficient and the starting state current, includes: determining the target rate coefficient according to the current SOH and the mapping rate coefficient; determining the target charge and discharge rate according to the target rate coefficient and the mapping rate value coefficient; determining the target charge and discharge current according to the target charge and discharge rate and the starting state current.

The target rate coefficient is a charge and discharge rate coefficient acquired by comprehensive processing of the current SOH and the mapping rate coefficient, wherein the comprehensive processing may be to select the minimum value or average value of the current SOH and the mapping rate coefficient.

The target charge and discharge rate is a charge and discharge rate calculated based on the target rate coefficient and the mapping rate value coefficient by for example the product calculation thereof.

Specifically, after determining the target charge and discharge rate, the target charge and discharge current can be calculated based on the target charge and discharge rate and the starting state current. For example, the target charge and discharge rate and the starting state current can be multiplied as the target charge and discharge current. It can be understood that since the battery life is inversely proportional to the charge and discharge rate, the target charge and discharge rate is reduced by the presence of the mapping rate coefficient and the mapping rate value coefficient, thereby reducing the decay rate of the battery life, which is beneficial to improve the accuracy of battery charge and discharge control, improve battery safety, and ensure that the battery usage effect is maximized. As shown in FIG. 4, it is a schematic diagram showing the correspondence between the cycle life and the charge and discharge rate of a battery. It can be seen from the figure that the greater the charge and discharge rate, the faster the battery life decays.

In a possible implementation, determining the target rate coefficient according to the current SOH and the mapping rate coefficient includes: selecting a minimum value of the current SOH value corresponding to the current SOH and the mapping rate coefficient as the target rate coefficient.

The current SOH value corresponding to the current SOH is a value corresponding to the current state of health, that is, a value of SOH, such as a value between 0 and 100%.

Specifically, the minimum value of the current state of health and the mapping rate coefficient can be used as the target rate coefficient, thereby reducing the charge and discharge rate, improving the accuracy of battery charge and discharge control, improving battery safety, and maximizing the battery usage effect.

In a possible implementation, the target charge and discharge current can be calculated according to the following formula:

,

$$A = BOL\_A \times \min[SOH_1, C_1] \times C_2;$$

where, A represents the target charge and discharge current, $BOL\_A$ represents the starting state current, $SOH_1$ represents the current SOH value corresponding to the current SOH, $C_1$ represents the mapping rate coefficient, and $C_2$ represents the mapping rate value coefficient.

In a possible implementation, determining a target charge and discharge parameter of the battery based on the current state of health, includes: when the target charge and discharge parameters are the target charge and discharge depth, determining the mapped charge state range of the current SOH according to the preset correspondence between the charge state range and the SOH of the battery; determining the target charge and discharge depth according to the mapped charge state range.

The preset correspondence between the charge state range and the SOH of the battery is pre-constructed and used to represent a relationship between the SOC and SOH of the battery. By analyzing the correlation between the battery usage effect and the SOC and SOH, the correspondence between the SOC and SOH that maximizes the battery usage effect can be determined as the preset correspondence between the charge state range and the SOH of the battery, so that the optimal SOC can be determined according to the correspondence, and then the target charge and discharge depth determined according to the optimal SOC can maximize the battery charging effect.

The charge state range includes an upper limit of charge state and a lower limit of charge state, which is used to indicate that the battery is charged to the upper limit of charge state, discharged from the upper limit of charge state to the lower limit of charge state, then charged from the lower limit of charge state to the upper limit of charge state, and charged and discharged between the upper limit and lower limit of charge state.

Specifically, the preset correspondence between the charge state range and the SOH of the battery can be established by analyzing the correlation between the battery usage effect and SOC and SOH. According to the correspondence, the mapped charge state range corresponding to the current SOH can be determined. After the mapped charge state range is determined, the target charge and discharge depth can be calculated according to the upper and lower limits of charge state. In a possible implementation, the charge state range is adjusted according to the current SOH of the battery, and the target charge and discharge depth is determined according to the adjusted charge state range, so that the adjustment of the charge and discharge depth based on the current SOH of the battery is realized. As a result, the adjusted target charge and discharge depth is more accurate, which can reduce the decay rate of the battery life, which is conducive to improving the accuracy of battery charge and discharge control, improving battery safety, and ensuring the maximum of the battery usage effect. It can be understood that since the battery life is inversely proportional to the charge and discharge depth, in order to reduce the decay rate of the battery life, for batteries having used for more years, their charge state range can be set to a smaller value accordingly.

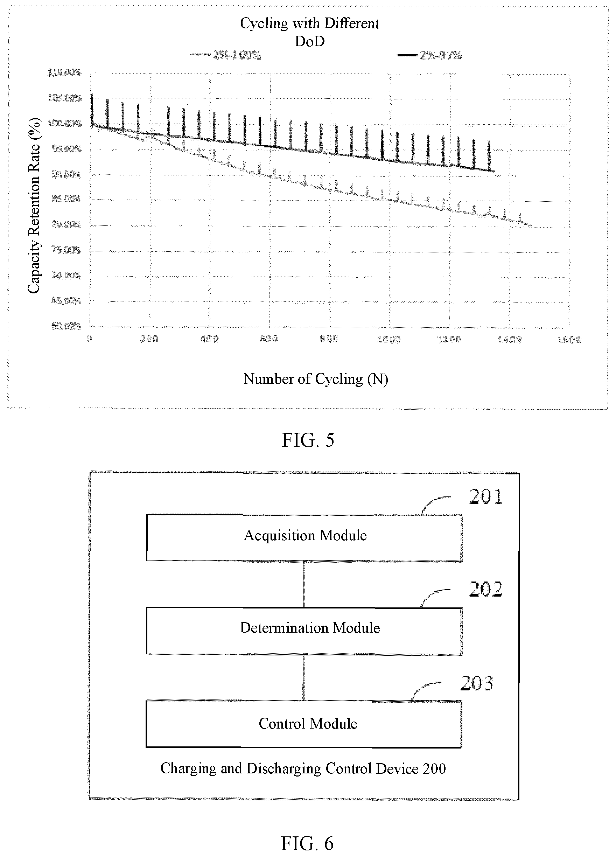

In a possible implementation, the upper and lower limits of charge state of four batteries in different years of use are shown in Table 2. As shown in FIG. 5, it is a schematic diagram showing a cycle life and a charge state range of a battery. It can be seen from the figure that the larger the charge state range, the faster the battery life decays.

Table 2: Upper and Lower Limits of Charge State for Four Batteries in Different Years of Use.

| Year of Use: x | x≤5 years | 5 years <x≤8 years | 8 years <x≤10 years | x>10 years |
|---|---|---|---|---|
| Upper Limit of Charge State | 95% | 92%~94% | 90%~92% | 85%~90% |
| Lower Limit of Charge State | 2% | 3%~5% | 5%~8% | 8%~10% |

In a possible implementation, the mapped charge state range includes upper and lower limits of mapped charge state; determining the target charge and discharge depth according to the mapped charge state range includes: calculating the difference between the upper and lower limits of mapped charge state in the mapped charge state range to acquire the target charge and discharge depth.

The charge state range includes the upper and lower limits of charge state, and accordingly, the mapped charge state range includes the upper and lower limits of mapped charge state.

Specifically, the difference between the upper and lower limits of mapped charge state in the mapped charge state range is calculated, and the difference is used as the target charge and discharge depth, thereby realizing the adjustment of the battery charge and discharge depth.

In a possible implementation, determining a target charge and discharge parameter of the battery based on the current state of health includes: when the target charge and discharge parameter is the target charge and discharge power, acquiring the starting state power of the battery; and determining the target charge and discharge power according to the starting state power and the current SOH of the battery.

The starting state power refers to the charge and discharge power of the battery at BOL, which can be read from the BMS.

Specifically, the product of the starting state power and the current SOH is calculated and used as the target charge and discharge power. It can be understood that in a possible implementation, the charge and discharge power is adjusted according to the current SOH of the battery, so that the adjusted target charge and discharge power is more accurate, which can reduce the decay rate of the battery life, which is conducive to improving the accuracy of battery charge and discharge control, improving battery safety, and maximizing the optimization of battery usage effect.

Step 103, charging and discharging the battery according to the target charge and discharge parameter.

Specifically, the BMS charges and discharges the battery according to the target charge and discharge parameter. Since the target charge and discharge parameter is calculated by taking into account the current SOH of the battery, the target charge and discharge parameter determined based on the current SOH are more accurate. The charge and discharge parameter are determined in real time based on the current SOH, which avoids the problem of rapid battery life decay caused by always using the charge and discharge current at the BOL. This reduces the decay rate of the battery life and improves the battery's usage effect and safety.

It is worth noting that, in possible implementations, the current SOH can be the SOH of any life cycle in the entire life cycle of the battery, it is hence possible to achieve charge and discharge control of the battery throughout its entire life cycle, which can ensure that the battery works efficiently throughout its entire life cycle and improve the battery's utilization efficiency.

According to the charging and discharging control method in a possible implementation of the present invention, the current SOH of the battery to be controlled during the charging and discharging process is acquired, the target charge and discharge parameter of the battery is determined according to the current SOH, and the battery is charged and discharged according to the target charge and discharge parameter. Since the impact of the change of the battery's SOH on the battery's charge and discharge capacity is fully considered, the target charge and discharge parameter determined based on the current SOH are more accurate, and the charge and discharge parameter is determined in real time based on the current SOH, which avoids the problem of rapid battery life decay caused by always using the charge and discharge current at the BOL, reduces the decay rate of the battery life, and improves the battery's usage effect and safety.

As shown in FIG. 6, a possible implementation of the present invention further provides a charging and discharging control device 200, which includes:

an acquisition module 201 configured to acquire the current SOH of the battery to be controlled during the charging and discharging process;

a determination module 202 configured to determine the target charge and discharge parameter of the battery according to the current SOH; and

a control module 203 configured to charge and discharge the battery according to the target charge and discharge parameter.

In a possible implementation, the target charge and discharge parameter includes at least one of the target charge and discharge current, the target charge and discharge depth, and the target charge and discharge power; the determination module 202 is specifically configured to:

when the target charge and discharge parameter is a target charge and discharge current, acquire a starting state current of the battery;

determine the mapping rate coefficient of the battery according to the preset correspondence between the rate coefficient and the SOH of the battery and the current SOH;

determine the mapping rate value coefficient of the battery according to the preset correspondence between the rate value coefficient and the SOH of the battery and the current SOH; and

determine the target charge and discharge current according to the current SOH, the mapping rate coefficient, the mapped rate value coefficient and the starting state current.

In a possible implementation, the determination module 202 is further configured to:

determine the target rate coefficient according to the current SOH and the mapping rate coefficient;

determine the target charge and discharge rate according to the target rate coefficient and the mapping rate value coefficient; and

determine the target charge and discharge current according to the target charge and discharge rate and the starting state current.

In a possible implementation, the determination module 202 is further configured to:
select the minimum value of the current SOH value and the mapping rate coefficient corresponding to the current SOH as the target rate coefficient.

In a possible implementation, the determination module 202 is further configured to:

when the target charge and discharge parameter is the target charge and discharge depth, determine the mapped charge state range corresponding to the current SOH according to the preset correspondence between the charge state range and the SOH of the battery, wherein the charge state range includes the upper and lower limits of the charge state; and

determine the target charge and discharge depth according to the mapped charge state range.

In a possible implementation, the mapped charge state range includes the upper and lower limits of mapped charge state; the determination module 202 is further specifically configured to: calculate the difference between the upper and lower limits of mapped charge state in the mapped charge state range to acquire the target charge and discharge depth.

In a possible implementation, the termination of the target charge and discharge parameter of the battery according to the current SOH at the determination module 202 includes:

when the target charge and discharge parameter is the target charge and discharge power, acquiring the starting state power of the battery; and
determining the target charge and discharge power based on the starting state power and current SOH of the battery.

In a possible implementation, the acquisition module 204 is specifically configured to:

select a plurality of test batteries in different years of use, perform cycle tests and storage tests on the test batteries, and acquire a correspondence between the year of use and the state of health of the battery, wherein the test batteries are same in type as the battery; and
acquire the current year of use of the battery, and determine the current SOH based on the current year of use and the correspondence between the year of use and the SOH.

A possible implementation of the present invention further provides an electronic device, which integrates any charging and discharging control device of the present invention, and the electronic device includes:

one or more processors;
a memory; and
one or more application programs, wherein the one or more application programs are stored in the memory and configured to be executed by the processor to perform the charging and discharging control method according to any possible implementation.

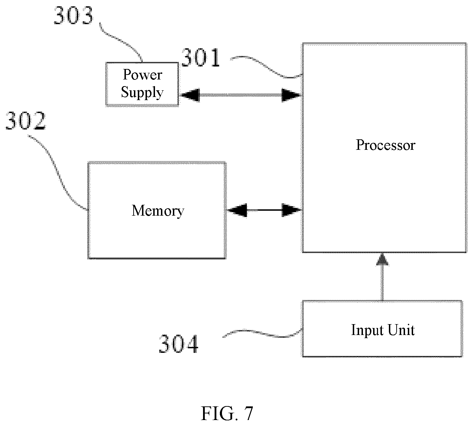

A possible implementation of the present invention further provides an electronic device, which integrates any charging and discharging control device of the present invention. As shown in FIG. 7, it is a schematic diagram showing the structure of an electronic device according to an embodiment of the present invention, which will be specifically described as follows.

The electronic device may include components such as a processor 301 with one or more processing cores, a memory 302 with one or more computer-readable storage media, a power supply 303, and an input unit 304. Those skilled in the art will appreciate that structure of the electronic device as shown in FIG. 7 does not constitute a limitation on the electronic device, and may include more or fewer components than shown in the figure, or combine certain components, or arrange the components differently.

The processor 301 is the control center of the electronic device. It uses various interfaces and lines to connect various parts of the entire electronic device. By running or executing software programs and/or modules stored in the memory 302 and calling data stored in the memory 302, it performs various functions of the electronic device and processes data, thereby monitoring the electronic device as a whole. Optionally, the processor 301 may include one or more processing cores. In a possible implementation, the processor 301 may integrate an application processor and a modem processor, wherein the application processor mainly processes the operating system, user interface, and application programs, and the modem processor mainly processes wireless communications. It is understandable that the modem processor may not be integrated into the processor 301.

The memory 302 may be configured to store software programs and modules. The processor 301 executes various functional applications and data processing by running the software programs and modules stored in the memory 302. The memory 302 can mainly include a program storage area and a data storage area, wherein the program storage area can store an operating system, an application required for at least one function (such as a sound playback function, an image playback function, etc.), etc.; the data storage area can store data created according to the use of the electronic device, etc. In addition, the memory 302 may include a high-speed random access memory, and may also include a non-volatile memory, such as at least one disk storage device, a flash memory device, or other volatile solid-state storage devices. Accordingly, the memory 302 may also include a memory controller to provide the processor 301 with access to the memory 302.

The electronic device also includes a power supply 303 for supplying power to various components. In a possible implementation, the power supply 303 can be logically connected to the processor 301 by a power management system, so that the power management system can manage charging, discharging, power consumption, etc. The power supply 303 may also include any components such as one or more DC or AC power supplies, recharging systems, power failure detection circuits, power converters or inverters, and power status indicators.

The electronic device may further include an input unit 304, which may be configured to receive input digital or character information and generate keyboard, mouse, joystick, optical or trackball signal input related to user settings and function control.

Although not shown, the electronic device may further include a display unit, etc., which will not be described in detail herein. Specifically, in a possible implementation, the processor 301 in the electronic device will load the executable files corresponding to the processes of one or more application programs into the memory 302 according to the instructions, and the processor 301 will run the application programs stored in the memory 302, thereby implementing various functions, wherein the instructions are as follows:

acquiring the current SOH of the battery to be controlled during the charging and discharging process;
determining the target charge and discharge parameter of the battery based on the current SOH; and
charging and discharging the battery according to the target charge and discharge parameter.

A person skilled in the art will appreciate that all or part of the steps of the charging and discharging control method may be completed by instructions, or by controlling related hardware according to instructions. The instructions may be stored in a computer-readable storage medium and loaded and executed by a processor.

To this end, a possible implementation of the present invention further provides a computer-readable storage medium, which may be non-volatile or volatile. The computer-readable storage medium may include: a read-only memory (ROM), a random access memory (RAM), a disk or an optical disk, etc. A computer program is stored thereon, and the computer program is loaded by a processor to execute the steps in any of the charging and discharging control methods of the present invention. For example, the computer program loaded by the processor can execute the following steps:

acquiring the current SOH of the battery to be controlled during the charging and discharging process;
determining the target charge and discharge parameter of the battery based on the current SOH; and
charging and discharging the battery according to the target charge and discharge parameter.

A possible implementation of the present invention further provides a computer program product, including a computer program/instruction, which is configured to execute the steps in any charging and discharging control method of the present invention when executed by a processor.

## Claims

1. A charging and discharging control method, comprising steps of:

acquiring (101) a current state of health of a battery to be controlled during a charging and discharging process;
determining (102) a target charge and discharge parameter of the battery according to the current state of health; and
charging and discharging (103) the battery according to the target charge and discharge parameter;
**characterized in that** the target charge and discharge parameter includes at least one of a target charge and discharge current, a target charge and discharge depth, and a target charge and discharge power;
wherein the step of determining (102) the target charge and discharge parameter of the battery according to the current state of health comprises steps of:

acquiring a starting state current of the battery when the target charge and discharge parameter is the target charge and discharge current;
determining a mapping rate coefficient of the battery according to a preset correspondence between a rate coefficient and a state of health of the battery and according to the current state of health;
determining a mapping rate value coefficient of the battery according to a preset correspondence between a rate value coefficient and the state of health of the battery and according to the current state of health; and
determining the target charge and discharge current according to the current state of health, the mapping rate coefficient, the mapping rate value coefficient, and the starting state current.

2. The charging and discharging control method according to claim 1, wherein the step of determining the target charge and discharge current according to the current state of health, the mapping rate coefficient, the mapping rate value coefficient, and the starting state current comprises steps of:

> determining a target rate coefficient according to the current state of health and the mapping rate coefficient;
> determining a target charge and discharge rate according to the target rate coefficient and the mapping rate value coefficient; and
> determining the target charge and discharge current according to the target charge and discharge rate and the starting state current.

3. The charging and discharging control method according to claim 2, wherein the step of determining the target rate coefficient according to the current state of health and the mapping rate coefficient comprises a step of:
selecting a minimum value of a current state of health value corresponding to the current state of health and the mapping rate coefficient as the target rate coefficient.

4. The charging and discharging control method according to claim 1, wherein the step of determining (102) the target charge and discharge parameter of the battery according to the current state of health comprises steps of:

> determining a mapped charge state range corresponding to the current state of health according to a preset correspondence between a charge state range and the state of health of the battery when the target charge and discharge parameter is the target charge and discharge depth; and
> determining the target charge and discharge depth according to the mapped charge state range.

5. The charging and discharging control method according to claim 4, wherein the mapped charge state range comprises upper and lower limits of mapped charge state; and wherein the step of determining the target charge and discharge depth according to the mapped charge state range comprises a step of:
calculating a difference between the upper and lower limits of mapped charge state in the mapped charge state range to acquire the target charge and discharge depth.

6. The charging and discharging control method according to claim 1, wherein the step of determining (102) the target charge and discharge parameter of the battery according to the current state of health comprises steps of:

> acquiring a starting state power of the battery when the target charge and discharge parameter is the target charge and discharge power; and
> determining the target charge and discharge power according to the starting state power and the current state of health of the battery.

7. The charging and discharging control method according to any one of claims 1 to 6, wherein the step of acquiring a current state of health of a battery to be controlled during a charging and discharging process comprises steps of:

> selecting a plurality of test batteries in different years of use, performing cycle tests and storage tests on the test batteries to acquire a correspondence between a year of use and a state of health of the battery, wherein the test batteries are same in type as the battery to be controlled; and
> acquiring the current year of use of the battery, and determining the current state of health according to the current year of use and the correspondence between the year of use and the state of health.

8. An electronic device, comprising:

> one or more processors (301);
> a memory (302); and
> one or more application programs, **characterized in that** the one or more application programs are stored in the memory and configured to be executed by the processor to implement the charging and discharging control method according to any one of claims 1 to 7.

9. A computer-readable storage medium, having a computer program stored thereon, **characterized in that** the computer program is configured to be loaded by a processor to execute the charging and discharging control method according to any one of claims 1 to 7.

10. A charging and discharging control device (200), comprising:

an acquisition module (201) configured to acquire a current state of health of a battery to be controlled during a charging and discharging process;

a determination module (202) configured to determine a target charge and discharge parameter of the battery according to the current state of health; and

a control module (203) configured to charge and discharge the battery according to the target charge and discharge parameter;

**characterized in that** the target charge and discharge parameter includes at least one of a target charge and discharge current, a target charge and discharge depth, and a target charge and discharge power;

wherein determination module (202) is further configured for:

acquiring a starting state current of the battery when the target charge and discharge parameter is the target charge and discharge current;

determining a mapping rate coefficient of the battery according to a preset correspondence between a rate coefficient and a state of health of the battery and according to the current state of health;

determining a mapping rate value coefficient of the battery according to a preset correspondence between a rate value coefficient and the state of health of the battery and according to the current state of health; and

determining the target charge and discharge current according to the current state of health, the mapping rate coefficient, the mapping rate value coefficient, and the starting state current.

**Patentansprüche**

1. Verfahren zur Steuerung des Lade- und Entladevorgangs, umfassend die folgenden Schritte:

Erfassen (101) des aktuellen Zustands einer zu steuernden Batterie während eines Lade- und Entladevorgangs;

Bestimmen (102) eines Soll-Lade- und Entladeparameters der Batterie entsprechend dem aktuellen Zustand; und

Laden und Entladen (103) der Batterie entsprechend dem Soll-Lade- und Entladeparameter;

**dadurch gekennzeichnet, dass** der Soll-Lade- und Entladeparameter mindestens einen der folgenden Werte umfasst: einen Soll-Lade- und Entladestrom, eine Soll-Lade- und Entladetiefe und eine Soll-Lade- und Entladeleistung;

wobei der Schritt des Bestimmens (102) des Soll-Lade- und Entladeparameters der Batterie entsprechend dem aktuellen Gesundheitszustand die folgenden Schritte umfasst:

Erfassen eines Startzustandsstroms der Batterie, wenn der Soll-Lade- und Entladeparameter der Soll-Lade- und Entladestrom ist;

Bestimmen eines Zuordnungsratenkoeffizienten der Batterie gemäß einer voreingestellten Entsprechung zwischen einem Ratenkoeffizienten und einem Gesundheitszustand der Batterie sowie gemäß dem aktuellen Gesundheitszustand;

Bestimmen eines Zuordnungsratenwertkoeffizienten der Batterie gemäß einer voreingestellten Zuordnung zwischen einem Ratenwertkoeffizienten und dem Gesundheitszustand der Batterie sowie entsprechend dem aktuellen Gesundheitszustand; und

Bestimmen des Soll-Lade- und Entladestroms entsprechend dem aktuellen Gesundheitszustand, dem Zuordnungsratenkoeffizienten, dem Zuordnungsratenwertkoeffizienten und dem Startzustandsstrom.

2. Verfahren zur Lade- und Entladesteuerung nach Anspruch 1, wobei der Schritt des Bestimmens des Soll-Lade- und Entladestroms entsprechend dem aktuellen Gesundheitszustand, dem Zuordnungsratenkoeffizienten, dem Zuordnungsratenwertkoeffizienten und dem Startzustandsstrom folgende Schritte umfasst:

Bestimmen eines Sollratenkoeffizienten entsprechend dem aktuellen Gesundheitszustand und dem Zuordnungsratenkoeffizienten;

Bestimmen einer Soll-Lade- und Entladerate entsprechend dem Sollratenkoeffizienten und dem Zuordnungsratenwertkoeffizienten; und

Bestimmen des Soll-Lade- und Entladestroms entsprechend der Soll-Lade- und Entladerate und dem Startzustandsstrom.

3. Verfahren zur Steuerung des Lade- und Entladevorgangs gemäß Anspruch 2, wobei der Schritt des Bestimmens des Sollratenkoeffizienten entsprechend dem aktuellen Gesundheitszustand und dem Zuordnungsratenkoeffizienten

EP 4 686 038 B1

einen Schritt umfasst, der darin besteht,
einen Minimalwert eines dem aktuellen Gesundheitszustand und dem Zuordnungsratenkoeffizienten entsprechenden aktuellen Gesundheitszustandswerts als den Sollratenkoeffizienten auszuwählen.

4. Verfahren zur Steuerung des Lade- und Entladevorgangs gemäß Anspruch 1, wobei der Schritt des Bestimmens (102) des Soll-Lade- und Entladeparameters der Batterie entsprechend dem aktuellen Gesundheitszustand die folgenden Schritte umfasst:

   Bestimmen eines abgebildeten Ladezustandsbereichs, der dem aktuellen Gesundheitszustand entspricht, gemäß einer voreingestellten Entsprechung zwischen einem Ladezustandsbereich und dem Gesundheitszustand der Batterie, wenn der Soll-Lade- und Entladeparameter die Soll-Lade- und Entladetiefe ist; und
   Bestimmen der Soll-Lade- und Entladetiefe entsprechend dem abgebildeten Ladezustandsbereich.

5. Verfahren zur Lade- und Entladesteuerung gemäß Anspruch 4, wobei der abgebildete Ladezustandsbereich eine obere und eine untere Grenze des abgebildeten Ladezustands umfasst; und wobei der Schritt des Bestimmens der Soll-Lade- und Entladetiefe entsprechend dem abgebildeten Ladezustandsbereich einen Schritt umfasst, der darin besteht,
   eine Differenz zwischen der oberen und der unteren Grenze des abgebildeten Ladezustands innerhalb des abgebildeten Ladezustandsbereichs zu berechnen, um die Soll-Lade- und Entladetiefe zu ermitteln.

6. Verfahren zur Steuerung des Lade- und Entladevorgangs gemäß Anspruch 1, wobei der Schritt des Bestimmens (102) des Soll-Lade- und Entladeparameters der Batterie entsprechend dem aktuellen Gesundheitszustand folgende Schritte umfasst:

   Ermitteln einer Ausgangsleistung der Batterie, wenn der Soll-Lade- und Entladeparameter die Soll-Lade- und Entladeleistung ist; und
   Bestimmen der Soll-Lade- und Entladeleistung entsprechend der Ausgangsleistung und dem aktuellen Gesundheitszustand der Batterie.

7. Verfahren zur Steuerung des Lade- und Entladevorgangs nach einem der Ansprüche 1 bis 6, wobei der Schritt des Erfassens eines aktuellen Gesundheitszustands einer während eines Lade- und Entladevorgangs zu steuernden Batterie folgende Schritte umfasst:

   Auswählen einer Vielzahl von Testbatterien in unterschiedlichen Nutzungsjahren, Durchführen von Zyklustests und Lagertests an den Testbatterien, um eine Zuordnung zwischen einem Nutzungsjahr und einem Gesundheitszustand der Batterie zu ermitteln, wobei die Testbatterien vom gleichen Typ sind wie die zu steuernde Batterie; und
   Ermitteln des aktuellen Nutzungsjahres der Batterie und Bestimmen des aktuellen Gesundheitszustands entsprechend dem aktuellen Nutzungsjahr und der Zuordnung zwischen dem Nutzungsjahr und dem Gesundheitszustand.

8. Elektronisches Gerät, umfassend:

   einen oder mehrere Prozessoren (301);
   einen Speicher (302); und
   ein oder mehrere Anwendungsprogramme, **dadurch gekennzeichnet, dass** das eine oder die mehreren Anwendungsprogramme im Speicher gespeichert und so konfiguriert sind, dass sie vom Prozessor ausgeführt werden, um das Lade- und Entladesteuerungsverfahren gemäß einem der Ansprüche 1 bis 7 zu implementieren.

9. Ein computerlesbares Speichermedium, auf dem ein Computerprogramm gespeichert ist, **dadurch gekennzeichnet, dass** das Computerprogramm so konfiguriert ist, dass es von einem Prozessor geladen wird, um das Lade- und Entladesteuerungsverfahren gemäß einem der Ansprüche 1 bis 7 auszuführen.

10. Eine Lade- und Entladesteuerungsvorrichtung (200), umfassend:

   ein Erfassungsmodul (201), das so konfiguriert ist, dass es einen aktuellen Gesundheitszustand einer während eines Lade- und Entladevorgangs zu steuernden Batterie erfasst;
   ein Bestimmungsmodul (202), das so konfiguriert ist, dass es einen Soll-Lade- und Entladeparameter der Batterie entsprechend dem aktuellen Gesundheitszustand bestimmt; und

ein Steuermodul (203), das so konfiguriert ist, dass es die Batterie entsprechend dem Soll-Lade- und Entladeparameter lädt und entlädt;

**dadurch gekennzeichnet, dass** der Soll-Lade- und Entladeparameter mindestens einen der folgenden Parameter umfasst: einen Soll-Lade- und Entladestrom, eine Soll-Lade- und Entladetiefe und eine Soll-Lade- und Entladeleistung;

wobei das Bestimmungsmodul (202) ferner konfiguriert ist für:

das Erfassen eines Startzustandsstroms der Batterie, wenn der Soll-Lade- und Entladeparameter der Soll-Lade- und Entladestrom ist;

das Bestimmen eines Zuordnungsratenkoeffizienten der Batterie entsprechend einer voreingestellten Entsprechung zwischen einem Ratenkoeffizienten und einem Gesundheitszustand der Batterie sowie entsprechend dem aktuellen Gesundheitszustand;

Bestimmen eines Zuordnungsratenwertkoeffizienten der Batterie gemäß einer voreingestellten Entsprechung zwischen einem Ratenwertkoeffizienten und dem Gesundheitszustand der Batterie sowie gemäß dem aktuellen Gesundheitszustand; und

Bestimmen des Soll-Lade- und Entladestroms gemäß dem aktuellen Gesundheitszustand, dem Zuordnungsratenkoeffizienten, dem Zuordnungsratenwertkoeffizienten und dem Startzustandsstrom.

## Revendications

1. Procédé de commande de charge et de décharge, comprenant les étapes consistant à :

   acquérir (101) l'état de santé actuel d'une batterie à commander pendant un processus de charge et de décharge ;

   déterminer (102) un paramètre de charge et de décharge cible de la batterie en fonction de l'état de santé actuel ; et

   charger et décharger (103) la batterie conformément au paramètre de charge et de décharge cible ;

   **caractérisé en ce que** le paramètre de charge et de décharge cible comprend au moins l'un parmi un courant de charge et de décharge cible, une profondeur de charge et de décharge cible, et une puissance de charge et de décharge cible ;

   dans lequel l'étape consistant à déterminer (102) le paramètre de charge et de décharge cible de la batterie en fonction de l'état de santé actuel comprend les étapes suivantes :

   acquérir un courant d'état de départ de la batterie lorsque le paramètre de charge et de décharge cible est le courant de charge et de décharge cible ;

   déterminer un coefficient de taux de mappage de la batterie en fonction d'une correspondance prédéfinie entre un coefficient de taux et un état de santé de la batterie et en fonction de l'état de santé actuel ;

   déterminer un coefficient de valeur de taux de mappage de la batterie en fonction d'une correspondance prédéfinie entre un coefficient de valeur de taux et l'état de santé de la batterie et en fonction de l'état de santé actuel ; et

   déterminer le courant de charge et de décharge cible en fonction de l'état de santé actuel, du coefficient de taux de mappage, du coefficient de valeur de taux de mappage et du courant d'état de départ.

2. Procédé de commande de charge et de décharge selon la revendication 1, dans lequel l'étape consistant à déterminer le courant de charge et de décharge cible en fonction de l'état de santé actuel, du coefficient de taux de mappage, du coefficient de valeur de taux de mappage et du courant d'état de départ comprend les étapes consistant à :

   déterminer un coefficient de taux cible en fonction de l'état de santé actuel et du coefficient de taux de mappage ;

   déterminer un taux de charge et de décharge cible en fonction du coefficient de taux cible et du coefficient de valeur de taux de mappage ; et

   déterminer le courant de charge et de décharge cible en fonction du taux de charge et de décharge cible et du courant d'état de départ.

3. Procédé de commande de charge et de décharge selon la revendication 2, dans lequel l'étape consistant à déterminer le coefficient de taux cible en fonction de l'état de santé actuel et du coefficient de taux de mappage comprend une étape consistant à :

sélectionner une valeur minimale d'une valeur d'état de santé actuelle correspondant à l'état de santé actuel et au coefficient de taux de mappage comme coefficient de taux cible.

4. Procédé de commande de charge et de décharge selon la revendication 1, dans lequel l'étape consistant à déterminer (102) le paramètre de charge et de décharge cible de la batterie en fonction de l'état de santé actuel comprend les étapes consistant à :

   déterminer une plage d'états de charge cartographiée correspondant à l'état de santé actuel selon une correspondance prédéfinie entre une plage d'états de charge et l'état de santé de la batterie lorsque le paramètre de charge et de décharge cible est la profondeur de charge et de décharge cible ; et
   déterminer la profondeur de charge et de décharge cible en fonction de la plage d'états de charge cartographiée.

5. Procédé de commande de charge et de décharge selon la revendication 4, dans lequel la plage d'états de charge cartographiée comprend des limites supérieure et inférieure de l'état de charge cartographié ; et dans lequel l'étape consistant à déterminer la profondeur de charge et de décharge cible en fonction de la plage d'états de charge cartographiée comprend une étape consistant à :
   calculer une différence entre les limites supérieure et inférieure de l'état de charge cartographié dans la plage d'états de charge cartographiée afin d'obtenir la profondeur de charge et de décharge cible.

6. Procédé de commande de charge et de décharge selon la revendication 1, dans lequel l'étape consistant à déterminer (102) le paramètre de charge et de décharge cible de la batterie en fonction de l'état de santé actuel comprend les étapes consistant à :

   obtenir une puissance d'état de départ de la batterie lorsque le paramètre de charge et de décharge cible est la puissance de charge et de décharge cible ; et
   déterminer la puissance de charge et de décharge cible en fonction de la puissance d'état de départ et de l'état de santé actuel de la batterie.

7. Procédé de commande de charge et de décharge selon l'une quelconque des revendications 1 à 6, dans lequel l'étape consistant à acquérir un état de santé actuel d'une batterie à commander pendant un processus de charge et de décharge comprend les étapes consistant à :

   sélectionner une pluralité de batteries d'essai ayant différentes années d'utilisation, effectuer des tests de cycles et des tests de stockage sur les batteries d'essai afin d'établir une correspondance entre une année d'utilisation et un état de santé de la batterie, les batteries d'essai étant du même type que la batterie à contrôler ; et
   acquérir l'année d'utilisation actuelle de la batterie, et déterminer l'état de santé actuel en fonction de l'année d'utilisation actuelle et de la correspondance entre l'année d'utilisation et l'état de santé.

8. Dispositif électronique, comprenant :

   un ou plusieurs processeurs (301) ;
   une mémoire (302) ; et
   un ou plusieurs programmes d'application, **caractérisé en ce que** le ou les programmes d'application sont stockés dans la mémoire et configurés pour être exécutés par le processeur afin de mettre en œuvre le procédé de commande de charge et de décharge selon l'une quelconque des revendications 1 à 7.

9. Support de stockage lisible par ordinateur, sur lequel est stocké un programme informatique, **caractérisé en ce que** le programme informatique est configuré pour être chargé par un processeur afin d'exécuter le procédé de commande de charge et de décharge selon l'une quelconque des revendications 1 à 7.

10. Dispositif de commande de charge et de décharge (200), comprenant :

    un module d'acquisition (201) configuré pour acquérir un état de santé actuel d'une batterie à commander pendant un processus de charge et de décharge ;
    un module de détermination (202) configuré pour déterminer un paramètre de charge et de décharge cible de la batterie en fonction de l'état de santé actuel ; et
    un module de commande (203) configuré pour charger et décharger la batterie selon le paramètre de charge et de décharge cible ;

**caractérisé en ce que** le paramètre de charge et de décharge cible comprend au moins l'un parmi un courant de charge et de décharge cible, une profondeur de charge et de décharge cible, et une puissance de charge et de décharge cible ;

dans lequel le module de détermination (202) est en outre configuré pour :

acquérir un courant d'état de départ de la batterie lorsque le paramètre de charge et de décharge cible est le courant de charge et de décharge cible ;

déterminer un coefficient de taux de mappage de la batterie en fonction d'une correspondance prédéfinie entre un coefficient de taux et un état de santé de la batterie et en fonction de l'état de santé actuel ;

déterminer un coefficient de valeur de taux de mappage de la batterie selon une correspondance prédéfinie entre un coefficient de valeur de taux et l'état de santé de la batterie et en fonction de l'état de santé actuel ; et

déterminer le courant de charge et de décharge cible en fonction de l'état de santé actuel, du coefficient de taux de mappage, du coefficient de valeur de taux de mappage et du courant d'état de départ.

acquiring a current state of health of a battery to be controlled during a charging and discharging process — 101

determining a target charge and discharge parameter of the battery based on the current state of health — 102

charging and discharging the battery according to the target charge and discharge parameter — 103

FIG. 1

FIG. 2

FIG. 3

FIG. 4

FIG. 5

FIG. 6

FIG. 7

**EP 4 686 038 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112259813 A